# EUROPEAN PATENT APPLICATION

(11) **EP 4 629 695 A1**
(43) Date of publication of application: **08.10.2025**
(21) Application number: 23905679.9
(22) Date of filing: 04.12.2023
(51) Int. Cl.: H04W 36/04

(54) **CELL HANDOVER METHOD AND APPARATUS**

(30) Priority: 22.12.2022 CN 202211659074
(71) Applicant: Huawei Technologies Co., Ltd., Shenzhen, Guangdong 518129 (CN)
(72) Inventor: JIANG, Wenhuan, Shenzhen, Guangdong 518129 (CN); WU, Lianfang, Shenzhen, Guangdong 518129 (CN); GU, Chen, Shenzhen, Guangdong 518129 (CN)
(74) Representative: Maiwald GmbH
(86) International application number: PCT/CN2023/136154
(87) International publication number: WO 2024/131512

(57) **Abstract**

This application discloses a cell handover method and an apparatus. The method includes: When determining that a terminal device having a bearer with a UPIP function needs to be handed over between cells, and when determining a second access network device with a highest signal handover priority in a preset range, the first access network device first determines whether the second access network device supports the UPIP function. When the second access network device does not support the UPIP function, the first access network device reselects, as a handover target, a third access network device with a priority lower than that of the second access network device in access network devices that support the UPIP function in the preset range, and then hands over the terminal device to the third access network device. Because the third access network device supports the UPIP function, and can identify a protocol information element, and signal quality of the third access network device is higher than that of the first access network device, network performance can be improved.

## Description

This application claims priority to Chinese Patent Application No. 202211659074.7, filed with the China National Intellectual Property Administration on December 22, 2022 and entitled "CELL HANDOVER METHOD AND APPARATUS", which is incorporated herein by reference in its entirety.

### TECHNICAL FIELD

Embodiments of this application relate to the field of communication technologies, and in particular, to a cell handover method and an apparatus.

### BACKGROUND

A long term evolution (long term evolution, LTE) network includes a core network device and an evolved NodeB (eNodeB, eNB). The core network device includes a mobility management entity (mobility management entity, MME) and a user plane processing gateway (serving gateway, SGW). The MME belongs to a control plane part and is responsible for control plane mobility management, including user context and mobility status management, temporary user identity allocation, and the like. The SGW belongs to a user plane part and is responsible for initiating paging for downlink data in an idle state, managing and storing IP bearer parameters and intra-network routing information, and the like. The MME and SGWs are connected in a mesh mode, and one MME can control several SGWs. The core network device and the eNB communicate with each other through an S1 interface, and eNBs communicate with each other through an X2 interface. A user plane integrity protection (user plane integrity protection, UPIP) function is introduced in the protocol version LTE R17. This function introduces three bearer-level user plane integrity protection policies (required, preferred, and not needed), including the required policy that is forcibly performed.

When a user equipment has a bearer for which the UPIP function takes effect by using the required policy, after a source base station determines a target base station with optimal signal quality, the source base station directly performs handover to the target base station.

However, when the target base station does not support the UPIP function, the target base station cannot identify a protocol information element. This causes a handover failure and affects network performance.

### SUMMARY

This application provides a cell handover method and an apparatus, to improve network performance.

A first aspect of this application provides a cell handover method. The method includes: When a terminal device meets a cell handover condition, a first access network device determines a second access network device, where the second access network device is an access network device with a highest handover priority in a preset range, the terminal device is connected to the first access network device, and the terminal device has a bearer with a user plane integrity protection UPIP function; the first access network device determines whether the second access network device supports the UPIP function; when the second access network device does not support the UPIP function, the first access network device determines a third access network device, where a handover priority of the third access network device is lower than that of the second access network device; the first access network device determines whether the third access network device supports the UPIP function; when the third access network device supports the UPIP function, the first access network device hands over the terminal device to the third access network device.

In the foregoing aspect, when determining that the terminal device having the bearer with the UPIP function needs to be handed over between cells, and when determining the second access network device with the highest signal handover priority in the preset range, the first access network device first determines whether the second access network device supports the UPIP function. When the second access network device does not support the UPIP function, the first access network device reselects, as a handover target, the third access network device with a priority lower than that of the second access network device in access network devices that support the UPIP function in the preset range, and then hands over the terminal device to the third access network device. Because the third access network device supports the UPIP function, and can identify a protocol information element, and signal quality of the third access network device is higher than that of the first access network device, network performance can be improved.

In a possible implementation, the step of determining, by the first access network device, whether the second access network device supports the UPIP function includes: The first access network device obtains a protocol version of the second access network device from local data; the first access network device determines whether the protocol version of the second access network device supports the UPIP function; when the protocol version of the second access network device supports the UPIP function, the first access network device determines that the second access network device supports the UPIP function; when the protocol version of the second access network device does not support the UPIP function, the first access network device determines that the second access network device does not support the UPIP function.

In the foregoing possible implementation, the second access network device exchanges data with the first access network device through an X2 interface during establishment, in other words, the protocol version of the second access network device is already stored in local data of the first access network device. When needing to determine whether the second access network device supports the UPIP function, the first access network device may obtain the protocol version of the second access network device from the local data, and then determine whether the protocol version of the second access network device supports the UPIP function; to be specific, when the protocol version of the second access network device supports the UPIP function, the second access network device supports the UPIP function; when the protocol version of the second access network device does not support the UPIP function, the second access network device does not support the UPIP function. Directly determining whether the second access network device supports the UPIP function from the local data improves cell handover efficiency.

In a possible implementation, before that the first access network device hands over the terminal device to the third access network device, the method further includes: The first access network device sends a handover request to the third access network device, where the handover request includes context information of the bearer with the UPIP function; the first access network device receives a handover response from the third access network device, where the handover response is determined by the third access network device based on the context information; and when the handover response is handover accept, the step of handing over, by the first access network device, the terminal device to the third access network device is triggered.

In the foregoing possible implementation, after determining to hand over the terminal device to the third access network device, the first access network device further needs to determine whether the terminal device can be handed over to the third access network device, to be specific, send a handover request including the context information of the bearer with the UPIP function to the third access network device. The third access network device may determine, based on the context information, whether the terminal device can access the third access network device, and then feed back a handover response to the first access network device. The first access network device can hand over the terminal device to the third access network device only when the handover response indicates that the third access network device accepts the handover, so that feasibility of the solution is improved.

In a possible implementation, the step of determining, by the first access network device, whether the second access network device supports the UPIP function includes: The first access network device sends a first handover request to a core network device, to indicate that the terminal device is to be handed over to the second access network device; the first access network device receives a first handover command from the core network device; the first access network device determines whether the first handover command includes a security result information element; when the first handover command does not include the security result information element, the first access network device determines that the second access network device does not support the UPIP function; when the first handover command includes the security result information element, the first access network device determines that the second access network device supports the UPIP function.

In the foregoing possible implementation, the first access network device cannot interact with the second access network device through the X2 interface, and the core network device needs to determine whether the second access network device supports the UPIP function. The first access network device may send the first handover request to the core network device, to notify the core network device that the terminal device needs to be handed over to the second access network device. After receiving the first handover request, the core network device may send the handover request to the second access network device, and receive a handover request response fed back by the second access network device. Then, the core network device feeds back a first handover command to the first access network device. When the second access network device does not support the UPIP function, the first handover command does not carry the security result information element. When the second access network device supports the UPIP function, the first handover command carries the security result information element. In other words, the first access network device may determine, depending on whether the first handover command carries the security result information element, whether the second access network device supports the UPIP function. When the X2 interface is unavailable, whether the second access network device supports the UPIP function is determined by using the S1 interface, so that flexibility of the solution is improved.

In a possible implementation, after determining, by the first access network device, whether the third access network device supports the UPIP function, the method further includes: The first access network device determines a fourth access network device when the third access network device does not support the UPIP function, where a handover priority of the fourth access network device is lower than that of the third access network device; the first access network device sends a second handover request to the core network device, to indicate that the terminal device is to be handed over to the fourth access network device; the first access network device receives a second handover command from the core network device; the first access network device determines whether the second handover command includes a security result information element; when the second handover command includes the security result information element, the first access network device determines that the fourth access network device supports the UPIP function; and the first access network device hands over the terminal device to the fourth access network device.

In the foregoing possible implementation, when the third access network device still does not support the UPIP function, the first access network device may further send a second handover request to the core network device, to notify a core network that the terminal device is expected to be handed over to a fourth access network device. After receiving the first handover request, the core network device may send a handover request to the fourth access network device, and receive a handover request response fed back by the fourth access network device. Then, the core network device feeds back a second handover command to the first access network device. When the second handover command carries the security result information element, the core network device determines that the fourth access network device is a device that the terminal device is finally to be handed over to. This avoids a case in which user experience is affected because the access network device does not support the UPIP function.

In a possible implementation, the method further includes: When the second handover command does not include the security result information element, the first access network device determines that the fourth access network device does not support the UPIP function; and the first access network device selects a new access network device in descending order of handover priorities to request handover from the core network device.

In the foregoing possible implementation, if the second handover command still does not carry the security result information element, the first access network device sequentially selects a new access network device in descending order of the handover priorities as an expected handover target for the core network device. The determining is performed for a plurality of times, to increase a probability of determining a target access network device supporting the UPIP function, and improve user call experience.

A second aspect of this application provides a communication apparatus. The apparatus may implement the method in any one of the first aspect or the possible implementations of the first aspect. The apparatus includes a corresponding unit or module configured to perform the method. The unit or module included in the apparatus may be implemented by software and/or hardware. The apparatus may be, for example, an access network device, may be a chip, a chip system, a processor, or the like that supports the access network device in implementing the method, or may be a logical module or software that can implement all or some functions of the access network device.

A third aspect of this application provides a computer device, including a processor. The processor is coupled to a memory, and the memory is configured to store instructions. When the instructions are executed by the processor, the computer device is enabled to implement the method in any one of the first aspect or the possible implementations of the first aspect. For example, the computer device may be an access network device, or may be a chip, a chip system, or the like that supports the access network device in implementing the foregoing method.

A fourth aspect of this application provides a computer-readable storage medium. The computer-readable storage medium stores instructions. When the instructions are executed by a processor, the method in any one of the first aspect or the possible implementations of the first aspect is implemented.

A fifth aspect of this application provides a computer program product. The computer program product includes computer program code. When the computer program code is executed on a computer, the method in any one of the first aspect or the possible implementations of the first aspect is implemented.

### BRIEF DESCRIPTION OF DRAWINGS

FIG. 1 is a diagram of an architecture of a network system according to an embodiment of this application;
FIG. 2 is a schematic flowchart of a cell handover method according to an embodiment of this application;
FIG. 3 is a diagram of an X2 handover processing procedure according to an embodiment of this application;
FIG. 4 is a diagram of an S1 handover processing procedure according to an embodiment of this application;
FIG. 5 is a diagram of a structure of a cell handover apparatus according to an embodiment of this application; and
FIG. 6 is a diagram of a structure of a computer device according to an embodiment of this application.

### DESCRIPTION OF EMBODIMENTS

This application provides a cell handover method and an apparatus, to improve network performance.

The following describes embodiments of this application with reference to the accompanying drawings. It is clear that the described embodiments are merely some rather than all of embodiments of this application. A person of ordinary skill in the art may learn that, with development of technologies and emergence of new scenarios, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that data used in such a way are interchangeable in proper circumstances, so that embodiments described herein can be implemented in other orders than the order illustrated or described herein. In addition, the terms "include" and "have" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to the process, method, product, or device.

The specific term "example" herein means "used as an example, embodiment or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

The following describes some terms in embodiments of this application, to facilitate understanding of a person skilled in the art.

Due to movement of a terminal device, the terminal device may move from a coverage area of one cell to a coverage area of another cell. Each cell may be identified by using a unique number, which is referred to as a cell identity (Cell Identity, Cell ID). In this application document, a standard-defined cell global identifier (cell global identity, CGI) is used as an example for description of the cell ID. An access network device sends, to the terminal device, measurement configuration information (measurement configuration information) including a measurement object (measurement object, MO), a measurement configuration (quantity configuration), a measurement gap configuration, and other information. A measurement parameter of the measurement object may include a configuration of a measurement resource on a frequency corresponding to the measurement object, for example, one or more cells on the frequency. In other words, the measurement parameter of the measurement object sent by the access network device to the terminal device may include a cell list including one or more cells on the frequency. The terminal device performs cell measurement based on the measurement configuration information, and reports a measurement result to the access network device. The measurement result may include: reference signal received powers (reference signal received signals, RSRPs), reference signal received quality (reference signal received quality, RSRQ), received signal strength indicators (received signal strength indicators, RSSIs), and signal to interference plus noise ratios (signal to interference noise ratios, SINRs) of a plurality of cells that are measured and calculated by the terminal device based on reference signals from the plurality of cells. The access network device determines a handover priority of each cell based on a measurement result of a serving cell and a measurement result of a neighboring cell, and may hand over the terminal device to a cell with a high handover priority.

The access network device in embodiments of this application may be a base station. The base station may be configured to communicate with one or more user equipments, or may be configured to communicate with one or more base stations having some user equipment functions (for example, communication between a macro base station and a micro base station, such as access points). The terminal device is a user equipment. The user equipment may be configured to communicate with one or more user equipments (for example, D2D communication), or may be configured to communicate with one or more base stations. The user equipment may also be referred to as a user terminal, and may include some or all functions of a system, a subscriber unit, a subscriber station, a mobile station, a mobile wireless terminal, a mobile device, a node, a device, a remote station, a remote terminal, a terminal, a wireless communication device, a wireless communication apparatus, or a user agent. The user equipment may be a cellular phone, a cordless telephone set, a session initiation protocol (session initiation protocol, SIP) phone, a smartphone, a wireless local loop (wireless local loop, WLL) station, a personal digital assistant (personal digital assistant, PDA), a laptop computer, a handheld communication device, a handheld computing device, a satellite wireless device, a wireless modem card, and/or another processing device for communication in a wireless system. The base station may also be referred to as an access point, a node, a NodeB, an evolved NodeB, or another network entity, and may include some or all functions of the foregoing network entities. The base station may communicate with a wireless terminal through an air interface. The communication may be performed using one or more sectors. By converting a received air interface frame into an internet protocol (internet protocol, IP) packet, the base station may serve as a router between the wireless terminal and a remaining part of an access network. The access network includes an IP network. The base station may further coordinate air interface attribute management, and may further be a gateway between a wired network and a wireless network.

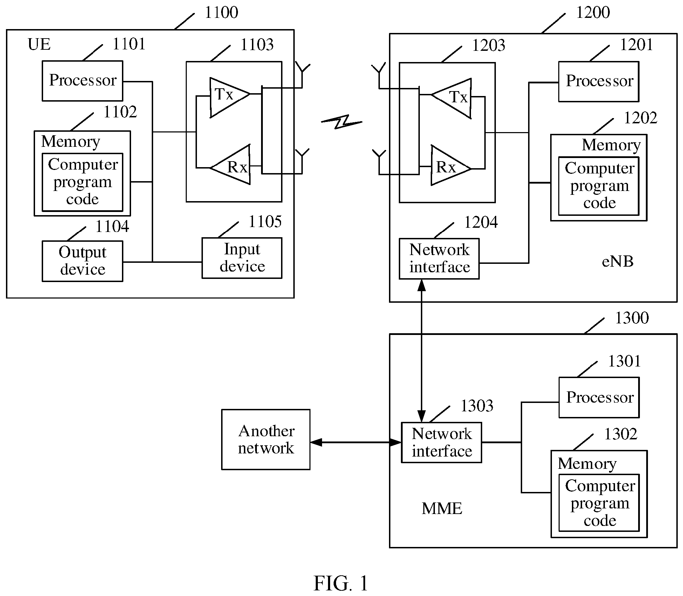

FIG. 1 is a diagram of an architecture of a network system according to an embodiment of this application. A UE 1100 includes at least one processor 1101, at least one memory 1102, and at least one transceiver 1103. Optionally, the UE 1100 may further include an output device 1104 and an input device 1105.

The processor 1101, the memory 1102, and the transceiver 1103 are connected through a bus. The processor 1101 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 1101 may alternatively be a plurality of processors, and each processor may be a single-core (single-CPU) processor or a multi-core (multi-CPU) processor. The processor herein may be one or more devices, circuits, and/or processing cores configured to process data (for example, computer program instructions).

The memory 1102 may be a read-only memory (read-only memory, ROM) or another type of static storage device that can store static information and instructions, or a random access memory (random access memory, RAM) or another type of dynamic storage device that can store information and instructions. The memory 1102 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used for carrying or storing expected program code in a form of instructions or a data structure and that is accessible by a computer, but is not limited thereto. The memory 1102 may exist independently and is connected to the processor 1101 through the bus. The memory 1102 may alternatively be integrated with the processor 1101. The memory 1102 is configured to store application program code for performing the solutions in this application, and the processor 1101 controls the execution. The processor 1101 is configured to execute the computer program code stored in the memory 1102, to implement the methods in embodiments of this application.

The transceiver 1103 may be any transceiver-type apparatus, and is configured to communicate with another device or a communication network, for example, the Ethernet, a radio access network (radio access network, RAN), or a wireless local area network (wireless local area network, WLAN). The transceiver 1103 includes a transmitter Tx and a receiver Rx.

The output device 1104 communicates with the processor 401, and may display information in a plurality of manners. For example, the output device 1104 may be a liquid crystal display (liquid crystal display, LCD), a light emitting diode (light emitting diode, LED) display device, a cathode ray tube (cathode ray tube, CRT) display device, or a projector (projector). The input device 1105 communicates with the processor 1101, and may receive an input of a user in a plurality of manners. For example, the input device 1105 may be a mouse, a keyboard, a touchscreen device, or a sensor device.

An eNB 1200 includes at least one processor 1201, at least one memory 1202, at least one transceiver 1203, and at least one network interface 1204. The network interface 1204 is configured to connect to a network interface 1303 of a core network device 1300 through a link (for example, an S1 interface), or connect to a network interface 1204 of another eNB through a wired or wireless link (for example, an X2 interface). For functions of the components in the eNB 1200, refer to the function descriptions of the components in the UE 1100. Details are not described herein again.

The core network device 1300 may provide a further connection to a network, for example, a telephony network and/or a data communication network (for example, an internet). The core network device 1300 includes at least one processor 1301, at least one memory 1302, and at least one network interface 1303. For functions of the components in the core network device 1300, refer to function descriptions of the components in the UE 1100. Details are not described herein again.

The core network device and the eNB communicate with each other through an S1 interface, and eNBs communicate with each other through an X2 interface. A user plane integrity protection (user plane integrity protection, UPIP) function is introduced in the protocol version LTE R17. This function introduces three bearer-level user plane integrity protection policies (required, preferred, and not needed), including the required policy that is forcibly performed. When a user equipment has a bearer for which the UPIP function takes effect by using the required policy, after a source base station determines a target base station with optimal signal quality, the source base station directly performs handover to the target base station. However, when the target base station does not support the UPIP function, the target base station cannot identify a protocol information element. This causes a handover failure and affects network performance.

To resolve the foregoing problem, embodiments of this application provide a cell handover method. The method is described as follows.

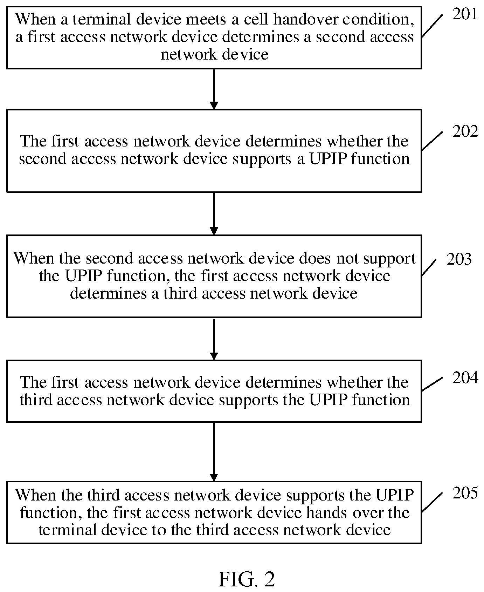

FIG. 2 is a schematic flowchart of a cell handover method according to an embodiment of this application. The method includes the following steps.

Step 201: When a terminal device meets a cell handover condition, a first access network device determines a second access network device, where the second access network device is an access network device with a highest handover priority in a preset range, the terminal device is connected to the first access network device, and the terminal device has a bearer with a user UPIP function.

In this embodiment, after receiving a measurement result sent by the terminal device, the first access network device may determine a handover priority list for a neighboring cell in the preset range. The handover priority list includes a cell with each handover priority, to be specific, a cell with a higher handover priority may provide better user experience for the terminal device. When the terminal device connected to the first access network device meets the cell handover condition, in other words, there is a handover priority list, to provide a best service for a user, an access network device (for example, the second access network device) with a highest handover priority may be selected as a target access network device. In this embodiment of this application, the terminal device has a bearer with the required policy, in other words, uses the UPIP function.

Step 202: The first access network device determines whether the second access network device supports the UPIP function.

In this embodiment, because the terminal device has a bearer using the UPIP function, the target access network device to be handed over to also needs to support the UPIP function. In other words, before determining the handover, the first access network device further needs to determine whether the second access network device supports the UPIP function, to meet normal use of the bearer using the UPIP function.

Because the first access network device and the second access network device may be connected through an X2 interface, cell handover in this embodiment of this application is X2 handover. It is assumed that the X2 interface of the first access network device or the second access network device is unavailable, or the X2 handover fails, an S1 interface may be used for handover, in other words, the cell handover in this embodiment of this application is S1 handover.

In an X2 handover scenario, the second access network device exchanges data with the first access network device through the X2 interface during establishment, in other words, a protocol version of the second access network device is already stored in local data of the first access network device. When needing to determine whether the second access network device supports the UPIP function, the first access network device may obtain the protocol version of the second access network device from the local data, and then determine whether the protocol version of the second access network device supports the UPIP function; to be specific, when the protocol version of the second access network device supports the UPIP function, the second access network device supports the UPIP function; when the protocol version of the second access network device does not support the UPIP function, the second access network device does not support the UPIP function.

Correspondingly, for whether a third access network device supports the UPIP function, the first access network device may also obtain a protocol version of the third access network device from the local data, and then determine whether the protocol version of the third access network device supports the UPIP function.

In an S1 handover scenario, the first access network device cannot interact with the second access network device through the X2 interface, and a core network device needs to determine whether the second access network device supports the UPIP function. The first access network device may send a first handover request to the core network device, to notify the core network device that the terminal device needs to be handed over to the second access network device. After receiving the first handover request, the core network device may send the handover request to the second access network device, and receive a handover request response fed back by the second access network device. Then, the core network device feeds back a first handover command to the first access network device. When the second access network device does not support the UPIP function, the first handover command does not carry a security result (security result) information element. When the second access network device supports the UPIP function, the first handover command carries the security result information element. In other words, the first access network device may determine, depending on whether the first handover command carries the security result information element, whether the second access network device supports the UPIP function.

Correspondingly, for whether the third access network device supports the UPIP function, the first access network device may also send, to the core network device, a handover request for requesting handover to the third access network device, and then determine whether a handover command fed back by the core network carries the security result information element, to determine whether the third access network device supports the UPIP function.

When the third access network device still does not support the UPIP function, the first access network device may further send a second handover request to the core network device, to notify a core network that the terminal device is expected to be handed over to a fourth access network device. After receiving the first handover request, the core network device may send the handover request to the fourth access network device, and receive a handover request response fed back by the fourth access network device. Then, the core network device feeds back a second handover command to the first access network device. When the second handover command carries the security result information element, the core network device determines that the fourth access network device is a device that the terminal device is finally to be handed over to.

If the second handover command still does not carry the security result information element, the first access network device sequentially selects a new access network device in descending order of handover priorities as an expected handover target for the core network device.

Step 203: When the second access network device does not support the UPIP function, the first access network device determines a third access network device, where a handover priority of the third access network device is lower than that of the second access network device.

In this embodiment, if it is determined that the protocol version of the second access network device does not support the UPIP function, the access network device needs to be reselected as the handover target. The first access network device may select a second optimal access network device from the handover priority list, in other words, select the third access network device whose handover priority is lower than that of the second access network device as the handover target.

Step 204: The first access network device determines whether the third access network device supports the UPIP function.

In this embodiment, correspondingly, after the third access network device is selected, it needs to be further determined whether the third access network device can support the UPIP bearer of the terminal device, that is, whether the third access network device supports the UPIP function.

Step 205: When the third access network device supports the UPIP function, the first access network device hands over the terminal device to the third access network device.

In this embodiment, if it is determined that the third access network device supports the UPIP function, the first access network device may determine that the terminal device can be handed over to the third access network device, and the first access network device may send a radio resource control (radio resource control, RRC) connection reconfiguration (connection reconfiguration) message to the terminal device, to indicate that the terminal device is to be handed over to the third access network device.

After determining to hand over the terminal device to the third access network device, the first access network device further needs to determine whether the terminal device can be handed over to the third access network device, to be specific, send a handover request including context information of the bearer with the UPIP function to the third access network device. The third access network device may determine, based on the context information, whether the terminal device can access the third access network device, and then feed back a handover response to the first access network device. The first access network device can hand over the terminal device to the third access network device only when the handover response indicates that the third access network device accepts the handover.

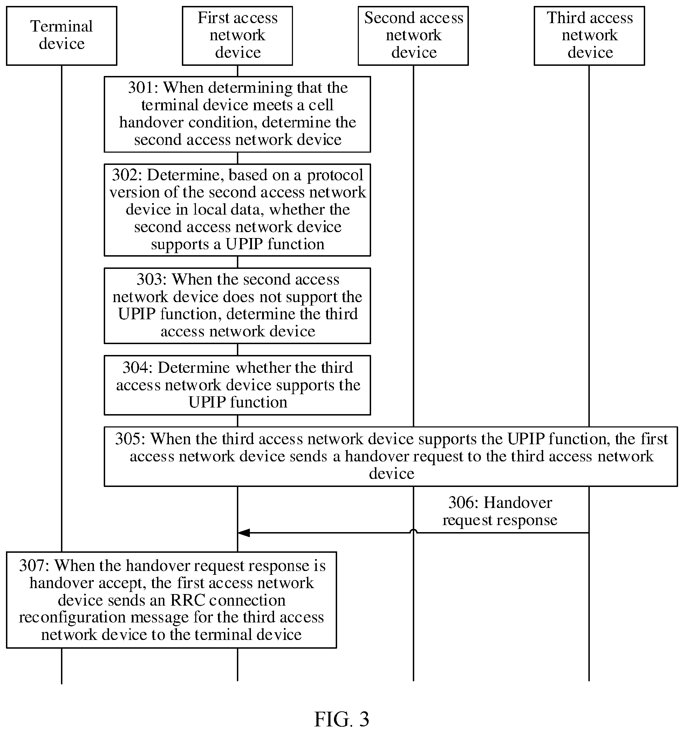

For an X2 handover scenario, a processing procedure in this embodiment of this application may be shown in FIG. 3. Step 301: When determining that a terminal device meets a cell handover condition, a first access network device determines a second access network device. Step 302: The first access network device determines, based on a protocol version of the second access network device in local data, whether the second access network device supports a UPIP function. Step 303: When the second access network device does not support the UPIP function, the first access network device determines a third access network device. Step 304: The first access network device determines whether the third access network device supports the UPIP function. Step 305: When the third access network device supports the UPIP function, the first access network device sends a handover request to the third access network device. Step 306: The third access network device feeds back a handover request response to the first access network device. Step 307: When the handover request response is handover accept, the first access network device sends an RRC connection reconfiguration message for the third access network device to the terminal device. For a subsequent procedure, refer to a processing procedure for X2 handover in 3GPP 36.423.

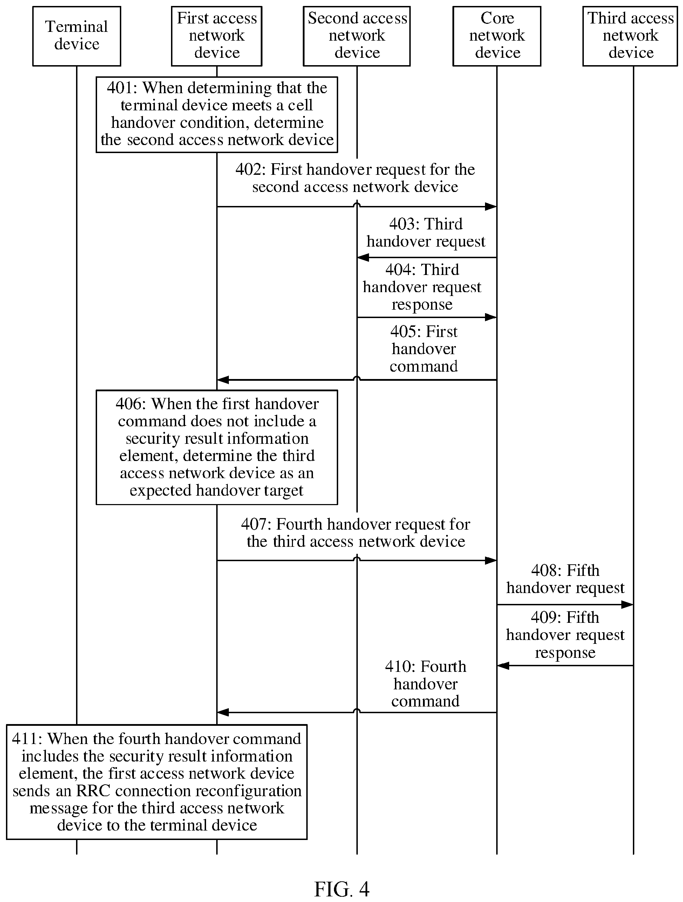

For an S1 handover scenario, a processing procedure in this embodiment of this application may be shown in FIG. 4. Step 401: When determining that a terminal device meets a cell handover condition, a first access network device determines a second access network device. Step 402: The first access network device sends a first handover request for the second access network device to a core network device. Step 403: The core network device sends a third handover request to the second access network device. Step 404: The second access network device sends a third handover request response to the core network device. Step 405: The core network device sends a first handover command to the first access network device based on the third handover request response. Step 406: When the first handover command does not include a security result information element, the first access network device determines a third access network device as an expected handover target. Step 407: The first access network device sends a fourth handover request for the third access network device to the core network device. Step 408: The core network device sends a fifth handover request to the third access network device. Step 409: The third access network device feeds back a fifth handover request response to the core network device. Step 410: The core network sends a fourth handover command to the first access network device based on the fifth handover request response. Step 411: When the fourth handover command includes the security result information element, the first access network device sends an RRC connection reconfiguration message for the third access network device to the terminal device. For a subsequent procedure, refer to a processing procedure for X2 handover in 3GPP 36.423.

In this embodiment of this application, when determining that the UE having the bearer with the UPIP function needs to be handed over between cells, and when determining the second access network device with the highest signal handover priority in the preset range, the first access network device first determines whether the second access network device supports the UPIP function. When the second access network device does not support the UPIP function, the first access network device reselects, as the handover target, the third access network device with a priority lower than that of the second access network device in access network devices that support the UPIP function in the preset range, and then hands over the terminal device to the third access network device. Because the third access network device supports the UPIP function, and can identify a protocol information element, and signal quality of the third access network device is higher than that of the first access network device, network performance can be improved.

The foregoing describes the cell handover method, and the following describes an apparatus for performing the method.

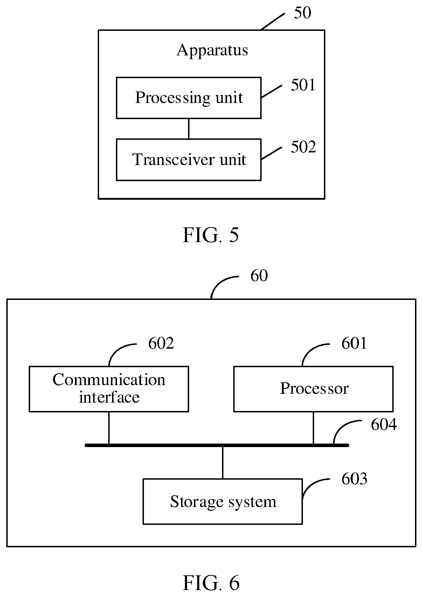

FIG. 5 shows a cell handover apparatus according to an embodiment of this application. The apparatus 50 includes:
a processing unit 501, configured to: when a terminal device meets a cell handover condition, determine a second access network device, where the second access network device is an access network device with a highest handover priority in a preset range, the terminal device is connected to the apparatus, and the terminal device has a bearer with a user plane integrity protection UPIP function; determine whether the second access network device supports the UPIP function; when the second access network device does not support the UPIP function, determine a third access network device, where a handover priority of the third access network device is lower than that of the second access network device; determine whether the third access network device supports the UPIP function; and when the third access network device supports the UPIP function, hand over the terminal device to the third access network device.

The processing unit 501 is configured to perform step 201 to step 205 in the method embodiment in FIG. 2.

Optionally, the processing unit 501 is specifically configured to:
obtain a protocol version of the second access network device from local data;
determine whether the protocol version of the second access network device supports the UPIP function;
when the protocol version of the second access network device supports the UPIP function, determine that the second access network device supports the UPIP function; and
when the protocol version of the second access network device does not support the UPIP function, determine that the second access network device does not support the UPIP function.

Optionally, the apparatus 50 further includes a transceiver unit 502, and the transceiver unit 502 is specifically configured to:
send a handover request to the third access network device, where the handover request includes context information of the bearer with the UPIP function;
receive a handover response from the third access network device, where the handover response is determined by the third access network device based on the context information; and
when the handover response is handover accept, hand over the terminal device to the third access network device.

Optionally, the apparatus 50 further includes a transceiver unit 502, and the transceiver unit 502 is specifically configured to:
send a first handover request to a core network device, to indicate that the terminal device is to be handed over to the second access network device; and
receive a first handover command from the core network device.

The processing unit 501 is specifically configured to:
determine whether the first handover command includes a security result information element;
when the first handover command does not include the security result information element, determine that the second access network device does not support the UPIP function; or
when the first handover command includes the security result information element, determine that the second access network device supports the UPIP function.

Optionally, the processing unit 501 is further configured to:
when the third access network device does not support the UPIP function, determine a fourth access network device, where a handover priority of the fourth access network device is lower than that of the third access network device.

The transceiver unit 502 is further configured to:
send a second handover request to the core network device, to indicate that the terminal device is to be handed over to the fourth access network device; and
receive a second handover command from the core network device.

The processing unit 501 is further configured to:
determine whether the second handover command includes a security result information element;
when the second handover command includes the security result information element, determine that the fourth access network device supports the UPIP function; and
hand over the terminal device to the fourth access network device.

Optionally, the processing unit 501 is further configured to:
when the second handover command does not include the security result information element, determine that the fourth access network device does not support the UPIP function; and
select a new access network device in descending order of handover priorities to request handover from the core network device.

FIG. 6 is a diagram of a possible logical structure of a computer device 60 according to an embodiment of this application. The computer device 60 includes a processor 601, a communication interface 602, a storage system 603, and a bus 604. The processor 601, the communication interface 602, and the storage system 603 are connected to each other through the bus 604. In this embodiment of this application, the processor 601 is configured to control and manage an action of the computer device 60. For example, the processor 601 is configured to perform the steps performed by the first access network device in the method embodiment in FIG. 2. The communication interface 602 is configured to support the computer device 60 in performing communication. The storage system 603 is configured to store program code and data of the computer device 60.

The processor 601 may be a central processing unit, a general-purpose processor, a digital signal processor, an application-specific integrated circuit, a field-programmable gate array or another programmable logic device, a transistor logic device, a hardware component, or any combination thereof. The processor 601 may implement or execute various example logical blocks, modules, and circuits described with reference to content disclosed in this application. Alternatively, the processor 601 may be a combination of processors implementing a computing function, for example, a combination of one or more microprocessors, or a combination of a digital signal processor and a microprocessor. The bus 604 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of indication, the bus is indicated by only one bold line in FIG. 6. However, it does not indicate that there is only one bus or only one type of bus.

The transceiver unit 502 in the apparatus 50 is equivalent to the communication interface 602 in the computer device 60, and the processing unit 501 in the apparatus 50 is equivalent to the processor 601 in the computer device 60.

The computer device 60 in this embodiment may correspond to the first access network device in the method embodiment in FIG. 2. The communication interface 602 in the computer device 60 may implement functions and/or steps implemented by the first access network device in the method embodiment in FIG. 2. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

In another embodiment of this application, a computer-readable storage medium is further provided. The computer-readable storage medium stores computer-executable instructions. When a processor of a device executes the computer-executable instructions, the device performs the method performed by the checking device in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the checking device in the foregoing method embodiment.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected depending on actual requirements to achieve the objectives of the solutions in embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for enabling a computer device (which may be a personal computer, a server, or an access network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A cell handover method, comprising:
when a terminal device meets a cell handover condition, determining, by a first access network device, a second access network device, wherein the second access network device is an access network device with a highest handover priority in a preset range, the terminal device is connected to the first access network device, and the terminal device has a bearer with a user plane integrity protection UPIP function;
determining, by the first access network device, whether the second access network device supports the UPIP function;
when the second access network device does not support the UPIP function, determining, by the first access network device, a third access network device, wherein a handover priority of the third access network device is lower than that of the second access network device;
determining, by the first access network device, whether the third access network device supports the UPIP function; and
when the third access network device supports the UPIP function, handing over, by the first access network device, the terminal device to the third access network device.

2. The method according to claim 1, wherein determining, by the first access network device, whether the second access network device supports the UPIP function comprises:
obtaining, by the first access network device, a protocol version of the second access network device from local data;
determining, by the first access network device, whether the protocol version of the second access network device supports the UPIP function;
when the protocol version of the second access network device supports the UPIP function, determining, by the first access network device, that the second access network device supports the UPIP function; and
when the protocol version of the second access network device does not support the UPIP function, determining, by the first access network device, that the second access network device does not support the UPIP function.

3. The method according to claim 2, wherein before handing over, by the first access network device, the terminal device to the third access network device, the method further comprises:
sending, by the first access network device, a handover request to the third access network device, wherein the handover request comprises context information of the bearer with the UPIP function;
receiving, by the first access network device, a handover response from the third access network device, wherein the handover response is determined by the third access network device based on the context information; and
when the handover response is handover accept, triggering the step of handing over, by the first access network device, the terminal device to the third access network device.

4. The method according to claim 1, wherein determining, by the first access network device, whether the second access network device supports the UPIP function comprises:
sending, by the first access network device, a first handover request to a core network device, to indicate that the terminal device is to be handed over to the second access network device;
receiving, by the first access network device, a first handover command from the core network device;
determining, by the first access network device, whether the first handover command comprises a security result information element;
when the first handover command does not comprise the security result information element, determining, by the first access network device, that the second access network device does not support the UPIP function; or
when the first handover command comprises the security result information element, determining, by the first access network device, that the second access network device supports the UPIP function.

5. The method according to claim 4, wherein after determining, by the first access network device, whether the third access network device supports the UPIP function, the method further comprises:
when the third access network device does not support the UPIP function, determining, by the first access network device, a fourth access network device, wherein a handover priority of the fourth access network device is lower than that of the third access network device;
sending, by the first access network device, a second handover request to the core network device, to indicate that the terminal device is to be handed over to the fourth access network device;
receiving, by the first access network device, a second handover command from the core network device;
determining, by the first access network device, whether the second handover command comprises a security result information element;
when the second handover command comprises the security result information element, determining, by the first access network device, that the fourth access network device supports the UPIP function; and
handing over, by the first access network device, the terminal device to the fourth access network device.

6. The method according to claim 5, wherein the method further comprises:
when the second handover command does not comprise the security result information element, determining, by the first access network device, that the fourth access network device does not support the UPIP function; and
selecting, by the first access network device, a new access network device in descending order of handover priorities to request handover from the core network device.

7. A cell handover apparatus, comprising:
a processing unit, configured to: when a terminal device meets a cell handover condition, determine a second access network device, wherein the second access network device is an access network device with a highest handover priority in a preset range, the terminal device is connected to the apparatus, and the terminal device has a bearer with a user plane integrity protection UPIP function; determine whether the second access network device supports the UPIP function; when the second access network device does not support the UPIP function, determine a third access network device, wherein a handover priority of the third access network device is lower than that of the second access network device; determine whether the third access network device supports the UPIP function; and when the third access network device supports the UPIP function, hand over the terminal device to the third access network device.

8. The apparatus according to claim 7, wherein the processing unit is specifically configured to:
obtain a protocol version of the second access network device from local data;
determine whether the protocol version of the second access network device supports the UPIP function;
when the protocol version of the second access network device supports the UPIP function, determine that the second access network device supports the UPIP function; and
when the protocol version of the second access network device does not support the UPIP function, determine that the second access network device does not support the UPIP function.

9. The apparatus according to claim 8, wherein the apparatus further comprises a transceiver unit, and the transceiver unit is specifically configured to:
send a handover request to the third access network device, wherein the handover request comprises context information of the bearer with the UPIP function;
receive a handover response from the third access network device, wherein the handover response is determined by the third access network device based on the context information; and
when the handover response is handover accept, hand over the terminal device to the third access network device.

10. The apparatus according to claim 7, wherein the apparatus further comprises a transceiver unit, and the transceiver unit is specifically configured to:
send a first handover request to a core network device, to indicate that the terminal device is to be handed over to the second access network device; and
receive a first handover command from the core network device; and
the processing unit is specifically configured to:
determine whether the first handover command comprises a security result information element;
when the first handover command does not comprise the security result information element, determine that the second access network device does not support the UPIP function; or
when the first handover command comprises the security result information element, determine that the second access network device supports the UPIP function.

11. The apparatus according to claim 10, wherein the processing unit is further configured to:
when the third access network device does not support the UPIP function, determine a fourth access network device, wherein a handover priority of the fourth access network device is lower than that of the third access network device; and
the transceiver unit is further configured to:
send a second handover request to the core network device, to indicate that the terminal device is to be handed over to the fourth access network device; and
receive a second handover command from the core network device; and
the processing unit is further configured to:
determine whether the second handover command comprises a security result information element;
when the second handover command comprises the security result information element, determine that the fourth access network device supports the UPIP function; and
hand over the terminal device to the fourth access network device.

12. The apparatus according to claim 11, wherein the processing unit is further configured to:
when the second handover command does not comprise the security result information element, determine that the fourth access network device does not support the UPIP function; and
select a new access network device in descending order of handover priorities to request handover from the core network device.

13. A computer device, comprising a processor and a memory, wherein
the processor is configured to execute instructions stored in the memory, to cause the computer device to perform the method according to any one of claims 1 to 6.

14. A computer-readable storage medium, wherein the computer-readable storage medium stores a computer program; and when the computer program is run on a computer, the computer is caused to perform the method according to any one of claims 1 to 6.

15. A computer program product, wherein when the computer program product is executed on a computer, the computer performs the method according to any one of claims 1 to 6.
